# EUROPÄISCHE PATENTSCHRIFT

(11) **EP 0 400 199 B1**
(45) Veröffentlichungstag und Bekanntmachung des Hinweises auf die Patenterteilung: **01.09.1993**
(21) Anmeldenummer: 89110054.7
(22) Anmeldetag: 02.06.1989
(51) Int. Cl.: E01B 9/18, B28B 23/00

(54) **Verfahren zum Befestigen von Einbauteilen in einer Schalung für Serienfertigteile**
Process to secure inserts in a form for the series production of parts
Méthode pour fixer des inserts à un coffrage pour éléments fabriqués en série

(43) Veröffentlichungstag der Anmeldung: 05.12.1990
(73) Patentinhaber: Wayss & Freytag Aktiengesellschaft, D-60486 Frankfurt (DE)
(72) Erfinder: Schimpff, Frithjof, Dipl.-Ing., D-6200 Wiesbaden (DE)

(56) Entgegenhaltungen:
- DE-U- 8 601 738
- FR-A- 1 518 229
- NL-A- 7 810 412

## Beschreibung

Die Erfindung betrifft Einbauteile in einer Schalung für Serienfertigteile aus Beton gemäß dem Oberbegriff der Ansprüche 1, 3 und 4.

Bei Serienfertigteilen aus Beton, vornehmlich Weichenschwellen, wird für den Einbau der Einbauteile - bei Weichenschwellen sind es Rohrhülsen für die Schienenbefestigungsschrauben - ein das sonst übliche bei Bauteilen weit überschreitendes Maß an Genauigkeit verlangt. Wichtige Bedingung ist, daß das Einbauteil beim Betonieren unverschieblich in der Schalung fixierbar und das Fertigteil aus der Schalung ohne Beschädigung der Einbauteile lösbar ist, und daß der Arbeitsaufwand für die dazu nötigen Maßnahmen gering bleibt. Außerdem muß die Verbindung der Einbauteile mit der Schalung abscherbar sein, um die zwischen Fertigteil und Schalung beim Erhärtungsprozeß des Betons auftretenden Bewegungen nicht zu behindern und keine Beschädigungen am Fertigteil oder am Einbauteil zu verursachen.

Aus der DE-OS 36 29 030 sind Einbauteile für Weichenschwellen bekannt. Diese Offenlegungsschrift beschreibt verschiedene Haltevorrichtungen, die im wesentlichen aus einem Zapfen und einem Befestigungsnippel bestehen. Der Nippel hält den Zapfen in einer die Lage des Einbauteils im Fertigteil bestimmenden Bohrung in der Schalplatte fest. Hohlzapfen und Nippel können dabei unterschiedliche, zum Teil sehr komplizierte und damit aufwendige Formen annehmen. Zum Teil sind die Nippel nur von der weniger leicht zugänglichen Unterseite der Schalung einbaubar.

Aus der NL-A-7810 412 ist eine Befestigung von einem Einbauteil auf einem Wandschalelement mit Hilfe von Blindnieten zu entnehmen. Diese Schrift gibt jedoch lediglich einen Hinweis, daß Blindniete für Befestigungszwecke auf einer Schalung verwendbar sind. Das Einbauteil wird durch mindestens 2 Blindniete gehalten, die das Einbauteil jedoch nicht mit Spannung gegen die Schalung andrücken, so daß die Gefahr besteht, daß Zementschlempe zwischen Schalung und Einbauteil eindringt und die genaue Lage des Einbauteils verändert. Diese Gefahr ist bei einem röhrenförmigen Einbauteil von geringem Querschnitt wesentlich erhöht, weil nur ein Niet zur Befestigung angebracht werden kann.

Aufgabe der Erfindung ist die Entwicklung eines Einbauteiles der erfindungsgemäßen Gattung, das unter Verwendung eines Blindnietes von oberhalb der Schalung auf dem Boden der Schalung so unter Spannung anpreßbar ist, daß zwischen Schalung und dem unteren Rand des Einbauteils keine Zementschlempe eindringen kann und daß das Einbauteil trotzdem beim Ausschalen des Fertigteils oder bei Schwindbewegungen sich leicht von der Schalung löst und nicht von den Einbauteilen behindert wird.

Die Aufgabe wird durch die im kennzeichnenden Teil der Ansprüche 1, 3 und 4 angegebenen Merkmale gelöst.

Der Vorteil der erfindungsgemäßen Einbauteile besteht darin, daß anstelle eines kompliziert aufgebauten besonderen Nippelteiles als Verbindungsmittel für die temporäre abscherbare Befestigung des Einbauteils auf der Schalung ein handelsüblicher Blindniet verwendbar ist. Der Blindniet erfüllt in einfacher Weise alle an eine temporäre Befestigung der Einbauteile auf der Schalung gestellten Anforderungen. Er erlaubt in besonders einfacher Weise die Befestigung des Einbauteils auf der Schalung von der Innenseite der Schalung aus herzustellen. Zugleich kann durch Festlegung der Sollbruchstelle des Ziehdorns innerhalb der Schalplatte - zweckmäßig unmittelbar hinter dem Ziehkopf, so daß kein den Niet aussteifendes Stück des Ziehdorns im Nietschaft verbleibt, - sowie durch Festlegung einer geeigneten Wanddicke und eines geeigneten Materials des Nietschafts eine Schwachstelle des Blindniet-Nippels mit genau definierter Festigkeit erzeugt werden, die bei auftretenden Scherspannungen abgeschert wird, bevor Schäden am Fertigteil entstehen können.

Die röhrenförmigen Einbauteile sind erfindungsgemäß mit Mitteln ausgestattet, die das Annieten des Einbauteils an die Schalung unter Erzeugung eines Anpreßdrucks zwischen Schalplatte und unterem Rand des Einbauteiles erlauben. Diese Mittel müssen in allen Fällen für den Gebrauchszustand des Fertigteils entfernbar sein.

Anspruch 1 beschreibt ein Einbauteil, bei dem diese Mittel vom Einbauteil getrennt und daher ohne weiteres lösbar sind. Bei den Einbauteilen nach den Ansprüchen 3 und 4 sind die Mittel dem Einbauteil angeformt und durch konstruktive Maßnahmen so ausgebildet, daß sie sich leicht vom Einbauteil lösen.

Zweckmäßige Ausgestaltungen zur Herstellung eines Anpreßdrucks sowie zur leichten Ablösung der Befestigungsmittel der Einbauteile vom Fertigteil beim Ausschalen sind in den Unteransprüchen beschrieben.

Weiterhin muß der Niet in der Schalung mit Sicherheit abgeschert werden. Dies wird durch entsprechende Wahl der Werkstoffe für die Vorrichtungsteile erreicht, die das Abscheren des Blindniets bewirken sollen, sowie durch eine Sollbruchstelle im Niet selbst. Die Vorrichtungsteile können aus besonders hartem Kunststoff oder Metall sein. Aus härterem Werkstoff ist zweckmäßig auch die lose Bodenplatte nach Anspruch 1.

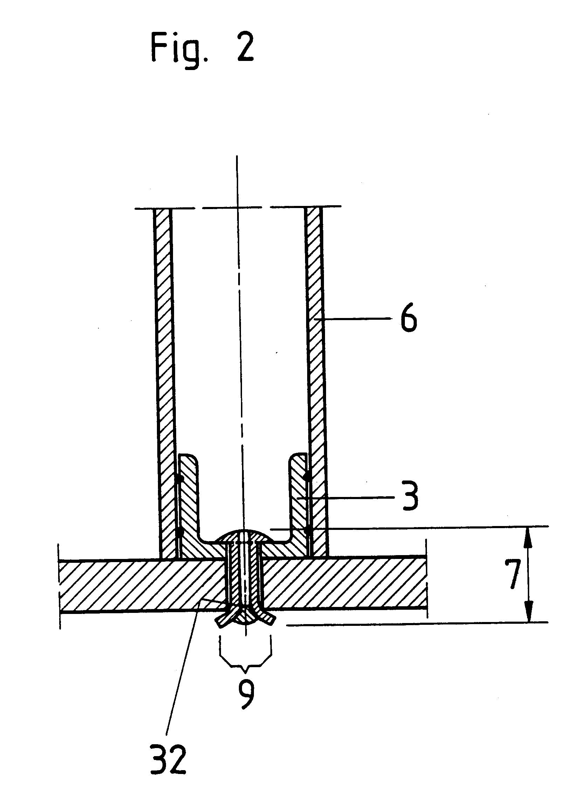

Die Erfindung wird anhand der Fig. 1 bis 6 erläutert. Sie zeigen Beispiele erfindungsgemäßer Befestigungen von Einbauteilen in der Schalung in vertikalen Schnitten.

Es zeigen:
- Fig. 1 und 2: Die Befestigungsart der erfindungsgemäßen Einbauteile durch einen Blindniet, und zwar Fig. 1 im Zustand der Montage vor dem Ziehen des Ziehdornes und Fig. 2 im Gebrauchszustand beim Betonieren des Fertigteils nach dem Ziehen des Ziehdorns,
- Fig. 3: ein Einbauteil nach den Ansprüchen 1 und 2,
- Fig. 4: ein Einbauteil nach den Ansprüchen 4 und 8,
- Fig. 5: ein Einbauteil nach Anspruch 3,
- Fig. 6: ein Einbauteil nach den Ansprüchen 5, 6 und 7.

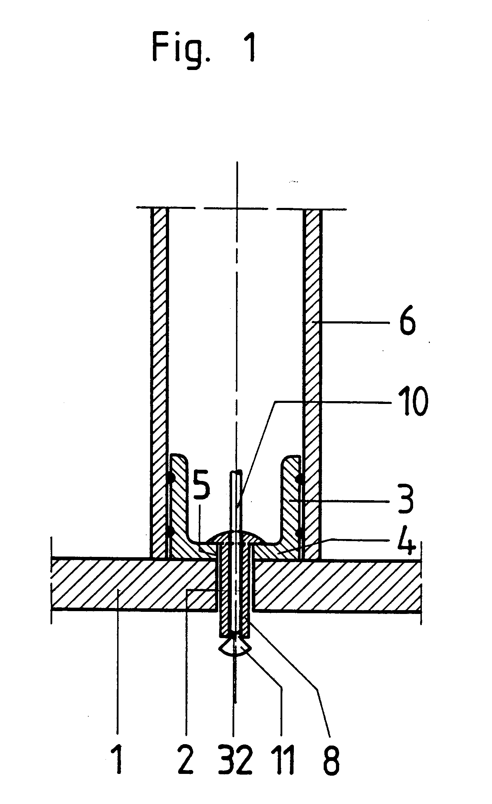

Auf der Schalplatte 1 ist nach Fig. 1 die Position des Einbauteils einer Rohrhülse - durch die Bohrung 2 festgelegt. Das Einbauteil wird mit Hilfe einer Bodenplatte 4 durch einen Blindniet 7 auf der Schalplatte 1 gehalten. Der Blindniet 7 durchgreift die zentrische Bohrung 5 der Bodenplatte 4 und die mit dieser in Deckung gebrachte Bohrung 2 der Schalplatte 1 von der Innenseite der Schalung her. Durch Ziehen des Ziehdorns 10 wird der Ziehkopf 11 in den Schaft 8 des Blindniets 7 eingepreßt und der Schaft 8 zu einer äußeren nietkopfartigen Ausweitung 9 an der Schalplatte 1 verformt. Der Ziehdorn 10 wird ausgezogen, bis der Ziehkopf 11 sich nach Ausbildung der Ausweitung 9 zum Anschlag in der Öffnung der Bohrung 2 verklemmt und an der Sollbruchstelle 32 reißt. Die Verbindung zwischen der das Einbauteil haltenden Bodenplatte 4 und der Schalplatte 1 bildet jetzt allein der mit Kopf und nietkopfartiger Ausweitung 9 verankerte hohle Schaft 8 des Blindniets 7, dessen Material und Wanddicke so wählbar sind, daß er bei einer Scherbeanspruch von bestimmter Größe abgeschert wird.

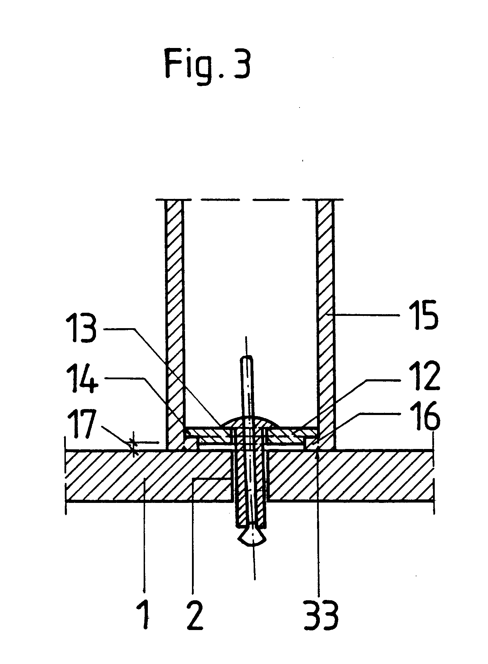

Im Beispiel nach Fig. 3 wird eine mittelbare Verbindung eines Einbauteils 15 mit der Schalung 1 mittels loser Bodenplatte 12 dargestellt. Der die Bohrung 13 der Bodenplatte 12 und die Bohrung 2 der Schalplatte 1 durchsetzende Blindniet 7 verbindet die Bodenplatte 12, die mit ihrem Anschlag 14 die am unteren Rand des Einbauteils 15 angeformten Vorsprünge 16 übergreift, mit der Schalplatte 1. Die Dicke der Bodenplatte 12 ist so gewählt, daß beim Aufliegen des Anschlags 14 auf den Konsolen des Einbauteils 15 ein Spalt 17 zwischen der Unterseite der Bodenplatte 12 und der Oberseite der Schalplatte 1 verbleibt. Dadurch wird sichergestellt, daß der Blindniet 7 durch seine Spannkraft das Einbauteil 15 dicht an die Schalplatte 1 anpreßt. Die Vorsprünge 16 weisen Sollbruchstellen 33 auf, um sie leicht entfernen zu können.

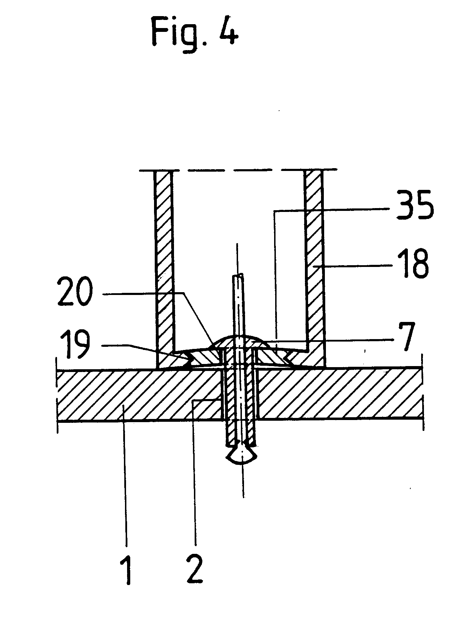

Die Fig. 4 bis 6 zeigen Lösungsbeispiele für eine unmittelbare Verbindung von Einbauteilen mit fest angeformter Bodenplatte und der Schalplatte durch einen Blindniet.

Nach Fig. 4 ist an einem Einbauteil 18 eine gewölbte Bodenplatte 19 angeformt. Die auf die tellerfederartig ausgebildete Bodenplatte 19 drückende Spannkraft des die Bohrung 20 der Bodenplatte 19 und die Bohrung 2 der Schalplatte 1 durchsetzenden Blindniets 7 bewirkt das dichte Anpressen des Einbauteils 18 an die Schalplatte 1. Die Bodenplatte 19 ist im Beispiel durch einen Ring 35 aus gegenüber der übrigen Bodenplatte hochfestem Material verstärkt.

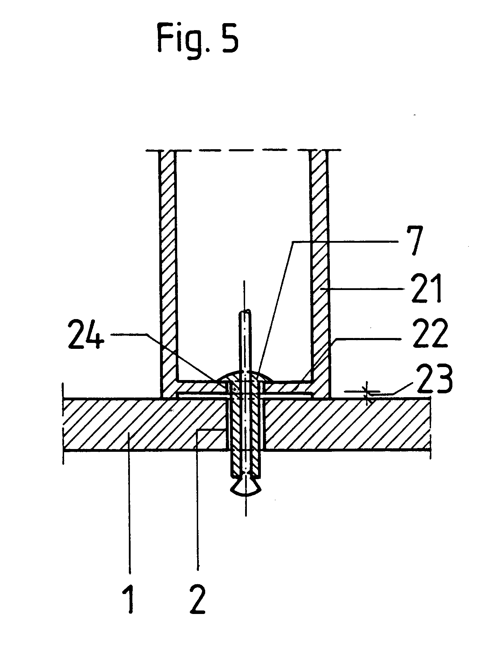

Fig. 5 zeigt ein Einbauteil 21, das eine um das Maß 23 gegen den unteren Rand des Einbauteils versetzte, angeformte, ebene Bodenplatte 22 aufweist. Der Blindniet 7 ist durch die zentrische Bohrung 24 der Bodenplatte 22 und die Bohrung 2 der Schalplatte 1 geschlagen. Der Versatz ermöglicht ein dichtes Anpressen des Einbauteils an die Schalplatte 1.

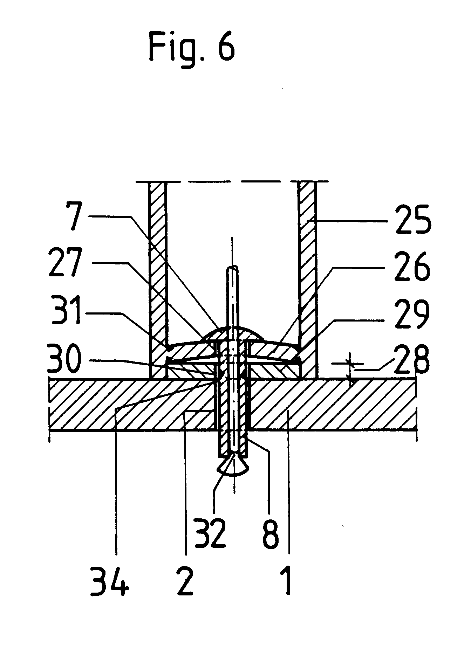

Eine Variante zu dem Beispiel nach Fig. 5 zeigt Fig. 6. Beim Einbauteil 25 ist die angeformte gewölbte Bodenplatte 26 um ein Maß 28 versetzt. In den Versatzraum ist eine Metallplatte 29 eingepaßt. Der Blindniet 7 durchsetzt hier die einander zugeordneten Bohrungen 27 der Bodenplatte 26 und 30 der Metallplatte 29 sowie die Bohrung 2 der Schalplatte 1. Die Wölbung der Bodenplatte 26 garantiert analog zum Beispiel nach Fig. 5 ein dichtes Anpressen des Einbauteils 25 an die Schalplatte 1.

In Fig. 6 ist eine am Rand der Bodenplatte 26 umlaufende Sollbruchlinie 31 dargestellt, die das spätere Ausstoßen der Bodenplatte 26 aus dem Einbauteil 25 erleichtert. Eine solche Sollbruchlinie kann bei allen Einbauteilen mit angeformten Bodenplatten vorgesehen werden. In Fig. 6 ist außerdem eine Sollbruchstelle 34 des Schafts 8 des Blindniets 7 dargestellt. Diese Sollbruchstelle soll das Abscheren des Niets in der vorgesehenen Abscherebene erleichtern.

## Patentansprüche

1. Röhrenförmiges Einbauteil (15) zum Einbau in Serienfertigteile aus Beton - vornehmlich zum Einbau in Spannbeton-Weichenschwellen -, das mittels eines handelsüblichen Blindniets (7) temporär auf dem Boden der Schalung an der Bodenplatte anschlagbar ist, wobei der Blindniet (7) mit dem Schaft (8) von oben durch die Bohrung (13, 20, 24, 27) einer das Einhauteil (15, 18, 21, 25) mittelbar oder unmittelbar tragenden Bodenplatte (12, 19, 22, 26) sowie durch die mit dieser in Deckung stehenden Bohrung (2) in der Schalplatte (1) einsetzbar ist, **dadurch gekennzeichnet,** daß es eine lose, mit einer zentrischen Bohrung (13) versehene Bodenplatte (12) aufweist, die mit einem Anschlag (14) am unteren Rand des Einbauteils (15) angeformte Vorsprünge (16) übergreift und daß die untere Stirnfläche des Einbauteils (15) gegen die schalplatte (1) vom Blindniet (7) dicht anpreßbar ist, indem der die Dicke des Anschlags (14) der Bodenplatte (12) überschreitende Teil der Plattendicke im Mittelbereich geringer gehalten ist als die Dicke der Vorsprünge (16) des Einbauteils (15), und dadurch ein Spalt (17) zwischen der Unterseite (17) der Bodenplatte (12) und der Oberseite der Schalplatte (1) entsteht.

2. Einbauteil nach Anspruch 1, **dadurch gekennzeichnet,** daß an den Vorsprüngen (16) Sollbruchstellen vorgesehen sind.

3. Röhrenförmiges Einbauteil (21) zum Einbau in Serienfertigteile aus Beton - vornehmlich zum Einbau in Spannbeton-Weichenschwellen -, das mittels eines handelsüblichen Blindniets (7) temporär auf dem Boden der Schalung an der Bodenplatte anschlagbar ist, wobei der Blindniet (7) mit dem Schaft (8) von oben durch die Bohrung (13, 20, 24, 27) einer das Einbauteil (15, 18, 21, 25) mittelbar oder unmittelbar tragenden Bodenplatte (12, 19, 22, 26) sowie durch die mit dieser in Deckung stehenden Bohrung (2) in der Schalplatte (1) einsetzbar ist, **dadurch gekennzeichnet,** daß es im unteren der Schalplatte (1) zugekehrten Bereich eine ebene, fest angeformte Bodenplatte (22) mit zentrischer Bohrung (24) aufweist, die gegen den unteren Rand des Einbauteils (21) um ein geringes Maß (23) nach oben versetzt ist, und daß die Bodenplatte Mittel aufweist, mittels derer die Bodenplatte (22) vom Einbauteil (21) abtrennbar ist.

4. Röhrenförmiges Einhauteil (15) zum Einbau in Serienfertigteile aus Beton - vornehmlich zum Einbau in Spannbeton-Weichenschwellen -, das mittels eines handelsüblichen Blindniets (7) temporär auf dem Boden der Schalung an der Bodenplatte anschlagbar ist, wobei der Blindniet (7) mit dem Schaft (8) von oben durch die Bohrung (13, 20, 24, 27) einer das Einbauteil (15, 18, 21, 25) mittelbar oder unmittelbar tragenden Bodenplatte (12, 19, 22, 26) sowie durch die mit dieser in Deckung stehenden Bohrung (2) in der Schalplatte (1) einsetzbar ist, **dadurch gekennzeichnet,** daß an seinem unteren, an der Schalplatte (1) anliegenden Rand eine dünne gewölbte Bodenplatte (19, 26) mit zentrischer Bohrung (20, 27) angeformt ist, deren konkave Seite der Schalplatte (1) zugekehrt ist, und daß die Bodenplatte Mittel aufweist, mittels derer die Bodenplatte (19, 26) vom Einbauteil (18, 25) abtrennbar ist.

5. Einbauteil (25) nach Anspruch 4, **dadurch gekennzeichnet,** daß die Bodenplatte (26) des Einbauteils (25) um ein geringes Maß (28) gegen den unteren Rand des Einbauteils nach oben versetzt ist.

6. Einbauteil (25) nach Anspruch 5, **dadurch gekennzeichnet** ist, daß in dem durch den Versatz entstandenen Raum zwischen der Unterseite der Bodenplatte (26) und der unteren Stirnfläche des Einbauteils (25) eine mit einer zentrischen Bohrung (30) versehene Metallscheibe (29) eingepaßt ist.

7. Einbauteil nach einem der Ansprüche 4 - 6, **dadurch gekennzeichnet,** daß die Bodenplatte (19, 26) durch eine vorbereitete Sollbruchlinie (31) an ihrem umlaufenden Rand nach Ausbau des Fertigteils aus der Schalung ausstoßbar ist.

8. Einbauteil nach einem der Ansprüche 3 - 6, **dadurch gekennzeichnet,** daß in der Bodenplatte (19, 22) ein die Bohrung (20, 24) konzentrisch umschließender Ring (35) aus gegenüber der übrigen Bodenplatte hochfestem Werkstoff kraftschlüssig eingebaut ist.

9. Einbauteil nach einem der Ansprüche 3 - 5, **dadurch gekennzeichnet,** daß es aus hartem Kunststoff, beispielsweise PA6, 6 mit Zusatz von Fasern, hergestellt ist.

10. Einbauteil nach Anspruch 6, **dadurch gekennzeichnet,** daß es aus mittelhartem Kunststoff, beispielsweise PE oder PA, hergestellt ist.

## Claims

1. Tubular insert (15) for installation in series production concrete precasts - particularly for installation in prestressed concrete turnover sleepers - that can be attached temporarily with a conventional blind rivet (7) to the base plate at the bottom of the form with the stem (8) of the blind rivet being insertable from above through the hole (13, 20, 24, 27) of a base plate (12, 19, 22, 26) carrying the insert (15, 18, 21, 25) directly or indirectly as well as through the hole (2) in the form plate (1) aligned with the base plate hole, characterized in that it has a detached base plate (12) with a centrical hole (13) which extends over moulded projections (16) at the bottom edge of the insert (15) with a stop (14) and in that the bottom face of the insert (15) can be pressed tightly against the form plate (1) with the blind rivet (7) by keeping the thickness of the plate area exceeding the thickness of the stop (14) of the base plate (12) lower in the center area than the thickness of the projections (16) of the insert (15) resulting in a gap (17) between the bottom face (17) of the base plate (12) and the upper face of the form plate (1).

2. Insert according to Claim 1, characterized in that the projections (16) are provided with predetermined breaking points.

3. Tubular insert (21) for installation in series production concrete precasts - particularly for installation in prestressed concrete turnover sleepers - that can be attached temporarily with a conventional blind rivet (7) to the base plate at the bottom of the form with the stem (8) of the blind rivet being insertable from above through the hole (13, 20, 24, 27) of a base plate (12, 19, 22, 26) carrying the insert (15, 18, 21, 25) directly or indirectly as well as through the hole (2) in the form plate (1) aligned with the base plate hole, characterized in that, in the bottom area facing the form plate (1), it has a level, rigid base plate (22) with centrical hole (24) having a slight offset (23) in the upward direction in relation to the bottom edge of the insert (21) and in that the base plate is equipped with means that allow the base plate (22) to be separated from the insert (21).

4. Tubular insert (15) for installation in series production concrete precasts - particularly for installation in prestressed concrete turnover sleepers - that can be attached temporarily with a conventional blind rivet (7) to the base plate at the bottom of the form with the stem (8) of the blind rivet being insertable from above through the hole (13, 20, 24, 27) of a base plate (12, 19, 22, 26) carrying the insert (15, 18, 21, 25) directly or indirectly as well as through the hole (2) in the form plate (1) aligned with the base plate hole, characterized in that, moulded at its bottom edge adjacent to the form plate (1), there is a thin vaulted base plate (19, 26) with centrical hole (20,27) whose concave side faces the form plate (1) and in that the base plate is equipped with means that allow the base plate (19, 26) to be separated from the insert (18, 25).

5. Insert (25) according to Claim 4, characterized in that the base plate (26) of the insert (25) has a slight offset (28) in the upward direction in relation to the bottom edge of the insert.

6. Insert (25) according to Claim 5, characterized in that the chamber resulting from the offset between the bottom face of the base plate (26) and the bottom face of the insert (25) is equipped with a metal plate (29) which has a centrical hole (30).

7. Insert according to any one of Claims 4-6, characterized in that after the removal of the precast part, the base plate (19, 26) can be ejected from the form due to a predetermined breaking line (31) at its surrounding edge.

8. Insert according to any one of Claims 3-6, characterized in that the base plate (19, 22) is equipped with an adherent ring made of high-strength material in relation to the rest of the base plate which concentrically encloses the hole (20, 24).

9. Insert according to any one of Claims 3-5, characterized in that it is made of a hard plastic material such as PA6 with additional fibres.

10. Insert according to Claim 6, characterized in that it is made of a medium hard plastic material such as PE or PA.

## Revendications

1. Pièce rapportée tubulaire (15) à installer dans des éléments préfabriqués en série réalisés en béton, notamment à installer dans des traverses d'aiguilles de chemin de fer en béton précontraint, qui peut être fixée temporairement sur la plaque de fond du coffrage au moyen d'un rivet aveugle (7) de type courant, le rivet aveugle (7) pouvant être introduit par le haut, par le corps de rivet (8), à travers le trou (13, 20, 24, 27) d'une plaque de fond (12, 19, 22, 26) portant directement ou indirectement la pièce rapportée (15, 18, 21, 25), de même qu'à travers un trou (2) de la plaque de coffrage (1) se trouvant en alignement avec ledit trou, caractérisée en ce qu'elle présente une plaque de fond libre (12), pourvue d'un trou central (13), qui couvre par une butée (14) des saillies (16) ménagées sur le bord inférieur de la pièce rapportée (15), et en ce que la surface frontale inférieure de la pièce rapportée (15) peut être étroitement appliquée contre la plaque de coffrage (1) par le rivet aveugle (7), avec un agencement tel que la partie de l'épaisseur de plaque excédant l'épaisseur de la butée (14) de la plaque de fond (12) est maintenue plus faible, dans la région médiane, que l'épaisseur des saillies (16) de la pièce rapportée (15), de sorte qu'un intervalle (17) en résulte entre la face inférieure de la plaque de fond (12) et la face supérieure de la plaque de coffrage (1).

2. Pièce rapportée selon la revendication 1, caractérisée en ce que des points d'affaiblissement pour rupture sont prévus sur les saillies (16).

3. Pièce rapportée tubulaire (21) à installer dans des éléments préfabriqués en série réalisés en béton, notamment à installer dans des traverses d'aiguilles de chemin de fer en béton précontraint, qui est fixée temporairement sur la plaque de fond du coffrage au moyen d'un rivet aveugle (7) de type courant, le rivet aveugle (7) pouvant être introduit par le haut, par le corps de rivet (8), à travers le trou (13, 20, 24, 27) d'une plaque de fond (12, 19, 22, 26) portant directement ou indirectement la pièce rapportée (15, 18, 21, 25), de même qu'à travers un trou (2) de la plaque de coffrage (1) se trouvant en alignement avec ledit trou, caractérisée en ce qu'elle présente, dans sa région inférieure tournée vers la plaque de coffrage (1), une plaque de fond solidaire (22), plane et pourvue d'un trou central (24), qui est déportée d'une petite distance (23) vers le haut par rapport à la face inférieure de la pièce rapportée (21), et en ce que la plaque de fond (22) présente des moyens permettant de la séparer de la pièce rapportée (21).

4. Pièce rapportée tubulaire (15) à installer dans des éléments préfabriqués en série réalisés en béton, notamment à installer dans des traverses d'aiguilles de chemin de fer en béton précontraint, qui peut être fixée temporairement sur la plaque de fond du coffrage au moyen d'un rivet aveugle (7) de type courant, le rivet aveugle (7) pouvant être introduit par le haut, par le corps de rivet (8), à travers le trou (13, 20, 24, 27) d'une plaque de fond (12, 19, 22, 26) portant directement ou indirectement la pièce rapportée (15, 18, 21, 25), de même qu'à travers un trou (2) de la plaque de coffrage (1) se trouvant en alignement avec ledit trou, caractérisée en ce qu'à sa face inférieure portant contre la plaque de coffrage (1) est conformée une mince plaque de fond bombée (19, 26) pourvue d'un trou central (20, 27), dont la face concave est tournée vers la plaque de coffrage (1), et en ce que la plaque de fond (19, 26) présente des moyens permettant de la séparer de la pièce rapportée (18, 25).

5. Pièce rapportée (25) selon la revendication 4, caractérisée en ce que la plaque de fond (26) de la pièce rapportée (25) est déportée d'une petite distance (28) vers le haut par rapport à la face inférieure de la pièce rapportée.

6. Pièce rapportée (25) selon la revendication 5, caractérisée en ce qu'une rondelle métallique (29), pourvue d'un trou central (30), est adaptée à l'espace dû au déport entre la face inférieure de la plaque de fond (26) et la face frontale inférieure de la pièce rapportée (25).

7. Pièce rapportée selon l'une quelconque des revendications 4 à 6, caractérisée en ce qu'après le décoffrage de l'élément préfabriqué, la plaque de fond (19, 26) peut être éjectée grâce à une ligne d'affaiblissement préparée pour rupture (31) à son bord périmétrique.

8. Pièce rapportée selon l'une quelconque des revendications 3 à 6, caractérisée en ce qu'est incorporé dans la plaque de fond (19, 22), par encastrement de formes, un anneau (35) entourant concentriquement le trou (20, 24) et réalisé en une matière très résistante par rapport au reste de la plaque de fond.

9. Pièce rapportée selon l'une quelconque des revendications 3 à 5, caractérisée en ce qu'elle est réalisée en matière plastique dure, par exemple PA6.6 avec addition de fibres.

10. Pièce rapportée selon la revendication 6, caractérisée en ce qu'elle est réalisée en matière plastique de moyenne dureté, par exemple en PE ou PA.
